# FASCICULE DE BREVET EUROPEEN

(11) **EP 4 115 055 B1**
(45) Date de publication et mention de la délivrance du brevet: **31.01.2024**
(21) Numéro de dépôt: 21711299.4
(22) Date de dépôt: 19.02.2021
(51) Int. Cl.: B29C 70/24, B29D 99/00, B29C 70/72, F01D 11/00, F01D 25/00

(54) **PROCEDE DE FABRICATION D'UNE PLATEFORME COMPOSITE POUR UNE SOUFFLANTE DE TURBOMACHINE D'AERONEF**
FERTIGUNGSVERFAHREN EINER PLATFORM IN VERBUNDBAUWEISE FÜR DEN BLÄSER EINES FLUGZEUGTRIEBWERKS
METHOD OF MANUFACTURING OF A COMPOSITE PLATFORM FOR A FAN OF AN AIRCRAFT ENGINE

(30) Priorité: 03.03.2020 FR 2002129
(43) Date de publication de la demande: 11.01.2023
(73) Titulaire: SAFRAN AIRCRAFT ENGINES, 75015 Paris (FR)
(72) Inventeur: MINERVINO, Matteo, 77550 MOISSY-CRAMAYEL (FR); CHARLEUX, François, 77550 MOISSY-CRAMAYEL (FR); FROMONTEIL, Didier, 77550 MOISSY-CRAMAYEL (FR)
(74) Mandataire: Gevers & Orès
(86) Numéro de dépôt international: PCT/FR2021/050297
(87) Numéro de publication internationale: WO 2021/176160

(56) Documents cités:
- EP-A1- 3 536 909
- WO-A2-2013/104853
- FR-A1- 2 988 427
- FR-A1- 3 018 473
- FR-A1- 3 082 876

## Description

### Domaine technique de l'invention

La présente invention concerne un procédé de fabrication d'une plateforme composite pour une soufflante de turbomachine d'aéronef.

### Arrière-plan technique

L'arrière-plan technique comprend notamment les documents FR-A1-2 988 427, WO-A2-2013/104853, FR-A1-3 082 876 et FR-A1-3 018 473.

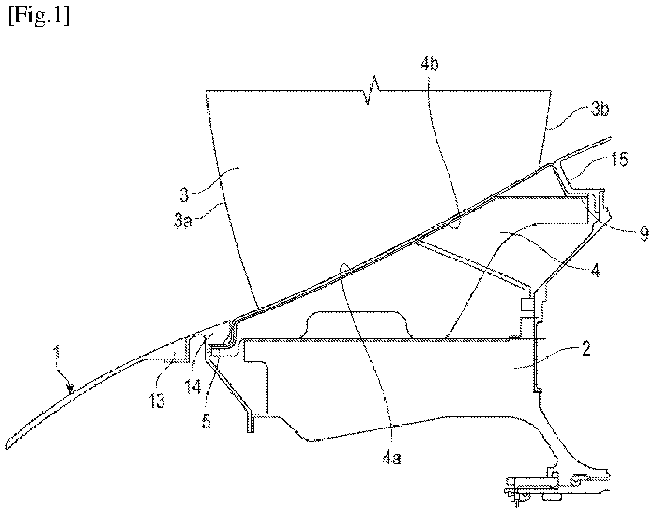

En se référant à la figure 1 qui montre une vue partielle en coupe d'un rotor 1 de soufflante d'une turbomachine d'aéronef, il est connu de l'état de la technique un rotor 1 de soufflante ayant un axe de rotation et comportant un carter de soufflante, un disque 2 de soufflante, des pales 3 ou aubes de soufflante comportant comme dispositif de rétention des pieds emmanchés dans des alvéoles de la périphérie dudit disque 2. Chaque pale 3 comprend un intrados, un extrados, un bord d'attaque 3a et un bord de fuite 3b.

Le rotor 1 de soufflante comprend des plateformes 4b intercalées entre les pales 3 de soufflante et fixées à la périphérie du disque 2. Chaque plateforme 4b comporte une face externe aérodynamique 4c s'étendant le long dudit axe sensiblement depuis les bords d'attaque 3a jusqu'aux bords de fuite 3b des pales 3 entre lesquelles cette plateforme 4b est montée.

Enfin, le rotor 1 comprend un cône amont 13, une virole amont 14 et une virole aval 15, les deux viroles 14, 15 étant solidarisées au disque 2 de soufflante.

Un tel rotor de soufflante est connu notamment du document EP-A1-1 970 537. Chaque plateforme doit assurer une fonction aérodynamique qui est sa fonction principale et une définition de la veine d'écoulement de l'air.

De plus, chaque plateforme doit satisfaire à toutes les conditions d'opération, à savoir assurer les performances pour toute l'enveloppe de fonctionnement, par exemple un vol pour un aéronef, garantir les exigences de sécurité et garantir la disponibilité du rotor comme partie du moteur pour un usage commercial.

En ce qui concerne la sécurité, chaque plateforme doit être apte à amortir une quantité importante d'énergie par écrasement de ses bords latéraux qui longent respectivement un intrados d'une aube et un extrados d'une aube adjacente.

Il est connu de réaliser des aubes de soufflante en matériau composite, l'utilisation de matériau composite dans le domaine aéronautique étant particulièrement intéressante pour leurs propriétés mécaniques et leurs gains en masse par rapport à un alliage métallique.

Les plateformes sont en général réalisées en alliage métallique. Cependant, il n'est pas concevable d'utiliser des plateformes métalliques avec des aubes composites car le risque d'usure et d'affaiblissement des aubes est trop important du fait des contacts métal-composite.

Il a donc déjà été proposé de réaliser des plateformes de soufflante en matériau composite. Cependant, les technologies actuellement connues ne sont pas entièrement satisfaisantes en particulier car le procédé de fabrication est long et complexe et entraîne un coût de production important.

La présente invention propose de résoudre au moins une partie de ces problèmes, de manière simple, efficace et économique.

### Résumé de l'invention

La présente invention concerne un procédé de fabrication d'une plateforme composite pour une soufflante de turbomachine d'aéronef, cette plateforme comportant une paroi de forme allongée et configurée pour s'étendre entre deux aubes de soufflante, cette paroi comportant une face externe aérodynamique et une face interne sur laquelle est située une patte de fixation configurée pour être fixée à un disque de soufflante,
caractérisé en ce qu'il comprend les étapes de :
a) réalisation d'une préforme par tissage en trois dimensions de fibres, cette préforme ayant une forme allongée le long d'un axe d'allongement,
b) délier une partie des fibres de la préforme le long dudit axe, depuis une extrémité longitudinale de la préforme, de façon à désolidariser au moins une couche longitudinale de fibres du reste de la préforme, ladite au moins une couche de fibres étant séparée du reste de la préforme par un espace longitudinal,
c) insérer une armature métallique (36) dans cet espace longitudinal, depuis ladite extrémité longitudinale de la préforme, cette armature étant formée d'une seule pièce avec ladite patte de fixation et étant positionnée dans ledit espace en fonction de la position souhaitée de cette patte, et
d) injecter une résine thermodurcissable ou thermoplastique dans la préforme de façon à former ladite paroi et à solidariser l'armature à cette paroi.

La plateforme selon l'invention est conçue pour réduire sa masse tout en augmentant sa raideur et sa durée de vie. Elle est relativement simple à fabriquer, par assemblage d'une armature avec une préforme dans laquelle est destinée à être injectée une résine. Il n'y a donc pas d'étape particulière d'assemblage mécanique, tel qu'un vissage, ce qui simplifie la fabrication et réduit le coût de fabrication de la pièce.

Le procédé selon l'invention peut comprendre une ou plusieurs des caractéristiques suivantes, prises isolément les unes des autres, ou en combinaison les unes avec les autres :
- l'armature comprend une plaque sensiblement plane logée dans ledit espace et intercalée entre ladite au moins une couche et le reste de la préforme ;
- la plaque est intercalée entre deux couches de fibres et le reste de la préforme, les deux couches étant sensiblement coplanaires et étant séparées l'une de l'autre par une fente qui débouche dans ledit espace et à travers laquelle s'étend ladite patte de fixation ;
- la patte de fixation est reliée à la plaque par des congés qui sont recouverts par une partie de ladite au moins une couche ; et
- ladite au moins une couche est reliée au reste de la préforme par au moins un bord tissé.

La présente invention concerne également une plateforme composite pour une soufflante de turbomachine d'aéronef, cette plateforme étant fabriquée par un procédé tel que décrit ci-dessus, cette plateforme étant dépourvue d'éléments mécaniques de fixation de l'armature à la préforme et à la plateforme, et ladite face externe étant dépourvue d'orifices de montage de tels éléments.

De préférence, l'armature comprend une plaque qui s'étend le long de la paroi et qui est reliée à ladite patte de fixation, cette plaque étant située à distance des extrémités amont et aval de la paroi.

Avantageusement, la paroi comprend un bord latéral qui est incurvé concave et un bord latéral opposé qui est incurvé convexe, la plaque comportant deux bords latéraux qui sont en retrait par rapport aux bords latéraux de la paroi
La présente invention concerne également une turbomachine d'aéronef, caractérisée en ce qu'elle comporte une soufflante comportant un disque portant des aubes et des plateformes telles que décrites ci-dessus.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :
[Fig.1] la figure 1 est une vue schématique en coupe axiale d'un rotor de soufflante selon l'état de la technique,
[Fig.2] la figure 2 est une vue schématique en perspective du rotor de soufflante de la figure 1,
[Fig.3] la figure 3 est une vue schématique en perspective d'une plateforme composite, vue de dessus ou de l'extérieur et qui ne fait pas partie de l'invention,
[Fig.4] la figure 4 est une vue schématique en coupe selon la ligne IV-IV de la figure 3,
[Fig.5] la figure 5 est une autre vue schématique en perspective de la plateforme de la figure 3, vue de dessous ou de l'intérieur,
[Fig.6] la figure 6 est une vue schématique en perspective d'une plateforme composite conformément à un mode de réalisation de l'invention,
[Fig.7] la figure 7 est une vue schématique en coupe selon la ligne VII-VII de la figure 6,
[Fig.8] la figure 8 est une vue schématique en coupe selon la ligne VIII-VIII de la figure 6, et

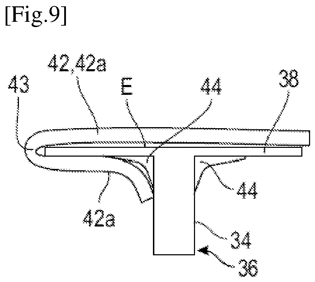

[Fig.9] la figure 9 est une vue similaire à celle de la figure 8 et illustrant une variante de réalisation de l'invention.

### Description détaillée de l'invention

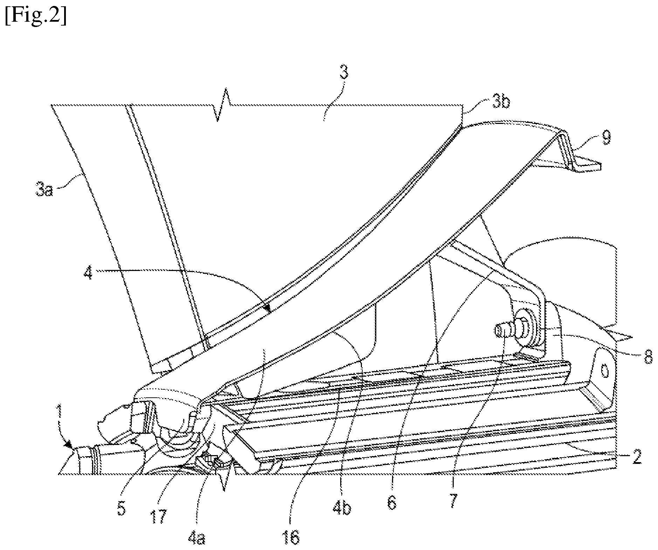

La figure 1 a été décrite dans ce qui précède et la figure 2 représente en perspective une partie du rotor de soufflante 1 de la figure 1. Les figures 1 et 2 illustrent ainsi l'art antérieur.

Le rotor 1 est monté tournant autour d'un axe de rotation et comporte un disque 2 de soufflante et des pales 3 de soufflante comportant des pieds emmanchés dans des alvéoles de la périphérie du disque 2, dont une seule pale 3 est visible à la figure 2. Chaque pale 3 comprend un intrados, un extrados, un bord d'attaque 3a et un bord de fuite 3b.

Une périphérie du disque 2 est avantageusement dentée en étant munie de dents 16, avantageusement de section trapézoïdale et s'étendant axialement sur le disque 2 par rapport à l'axe de rotation du rotor 1. Au moins une cale 17 est prévue côté amont entre deux dents 16 adjacentes qui forment une alvéole de réception d'un pied d'une pale 3, cette cale 17 étant destinée à bloquer axialement le pied de pale dans son alvéole correspondante.

Des plateformes 4 sont intercalées entre les pales 3 de soufflante et fixées à la périphérie du disque 2. Chaque plateforme 4 peut donc être interposée entre deux pales 3 de soufflante consécutives.

Chaque plateforme 4 comporte une face interne 4b (ou radialement interne par référence audit axe) et une face externe 4a aérodynamique. Ces faces 4a, 4b s'étendent le long de l'axe sensiblement depuis les bords d'attaque 3a jusqu'aux bords de fuite 3b des deux pales 3 entre lesquelles cette plateforme 4 est montée.

A son extrémité amont (par référence à l'écoulement des gaz dans la soufflante et la turbomachine), chaque plateforme 4 comprend un rebord 5 de fixation ou d'accrochage au disque 2. Un rebord 9 similaire est situé à l'extrémité aval de chaque plateforme 4.

La face interne 4b de chaque plateforme 4 est reliée à une patte de fixation 6 sur une bride 8 du disque 2. Cette patte 6 s'étend en saillie radialement vers l'intérieur et comprend à son extrémité libre radialement interne un orifice de passage d'une vis 7 de fixation de la patte et de la plateforme 4 à la bride 8 et donc au disque 2.

La plateforme 4 visible aux figures 1 et 2 est réalisée d'une seule pièce en alliage métallique et la présente invention propose une plateforme composite qui peut être utilisée par exemple avec des aubes de soufflante également en composite.

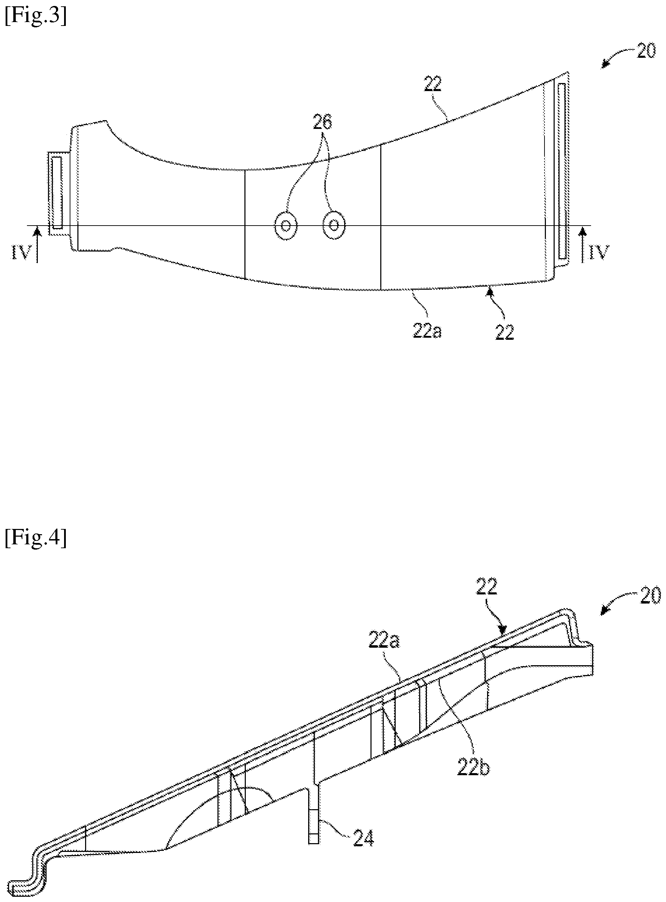

Les figures 3 à 5 décrivent un exemple de réalisation d'une plateforme composite qui ne fait pas partie de l'invention.

La plateforme composite 20 des figures 2 à 5 comporte une paroi 22 de forme allongée et configurée pour s'étendre entre deux aubes de soufflante.

Cette paroi 22 comporte une face externe 22a aérodynamique et une face interne 22b sur laquelle est située une patte de fixation 24 similaire à la patte 6 décrite dans ce qui précède.

La patte de fixation 24 est réalisée en alliage métallique et comprend une embase 24a reliée à une oreille 24b percée d'un orifice 24c de passage d'une vis (similaire à la vis 7 décrite dans ce qui précède).

L'embase 24a est plane et est appliquée sur la face interne 22b de la paroi 22.

La paroi 22 est réalisée en matériau composite à partir d'une résine. La paroi 22 comprend sensiblement en son milieu des orifices qui sont alignés avec des orifices de l'embase 24a et qui reçoivent des vis 26 de fixation de la patte 24 à la paroi 22. Chaque vis 26 comprend une tête, de préférence fraisée, engagée dans un renfoncement de la face externe 22a de la paroi, et une tige filetée sur laquelle est vissé un écrou prenant appui sur l'embase 24a.

Cette technologie de plateforme composite n'est pas entièrement satisfaisante car elle présente des inconvénients.
- Le positionnement de la patte 24 sur la paroi 22 nécessite une forte précision (et donc un fort surcoût) pour respecter les contraintes géométriques imposées par l'aérodynamique. En plus, les têtes de vis 26 doivent impérativement être recouvertes afin de tenir la géométrie aérodynamique de la veine, ce qui génère également un surcoût par ajout d'une étape de recouvrement délicate et complexe dans sa maîtrise. Par ailleurs, le fait de recouvrir les têtes de vis par un enduit rend plus difficile leur localisation pour un éventuel démontage de la patte et retrait de la plateforme en vue de son remplacement par exemple.
- Chaque plateforme 20 a une masse importante, environ 1 kilogramme chacune, un rotor de soufflante comportant par exemple dix-huit plateformes 20.
- Une surépaisseur de la paroi 22 au niveau des vis 26 et de l'embase 24a est nécessaire pour réduire l'effort de matage dans la paroi, générée par son serrage ; serrage qui doit aussi résister aux efforts centrifuges vus par la pièce : la forme de serrage doit être supérieure à la somme des forces de matage et centrifuge (F _{serrage} > F matage + F centrifuge).

La force de serrage est d'autant plus difficile à tenir que les têtes fraisées des vis 26 ne peuvent supporter des rondelles au droit de leur tête, ce qui participe à une mauvaise répartition des efforts de serrage et sollicite un volume plus faible de matière. - La tenue géométrique de chaque plateforme 20 au cours du fonctionnement moteur suite aux efforts centrifuges. La moindre déformation fait perdre du rendement à la soufflante. De même, l'utilisation des vis 26 à tête fraisée réduit le volume de matière chargée par l'assemblage et augmente significativement les contraintes locales, en particulier au niveau des têtes de vis.

Ces deux derniers points engendrent la nécessité d'un serrage de vis très contrôlé (clé dynamométrique) et donc coûteux. - La durabilité suite à l'étape de recouvrement des têtes de vis. La pièce doit en principe perdurer toute la vie du moteur sans altération. L'érosion alliée aux contraintes locales met en doute la possibilité de tenir ce critère.

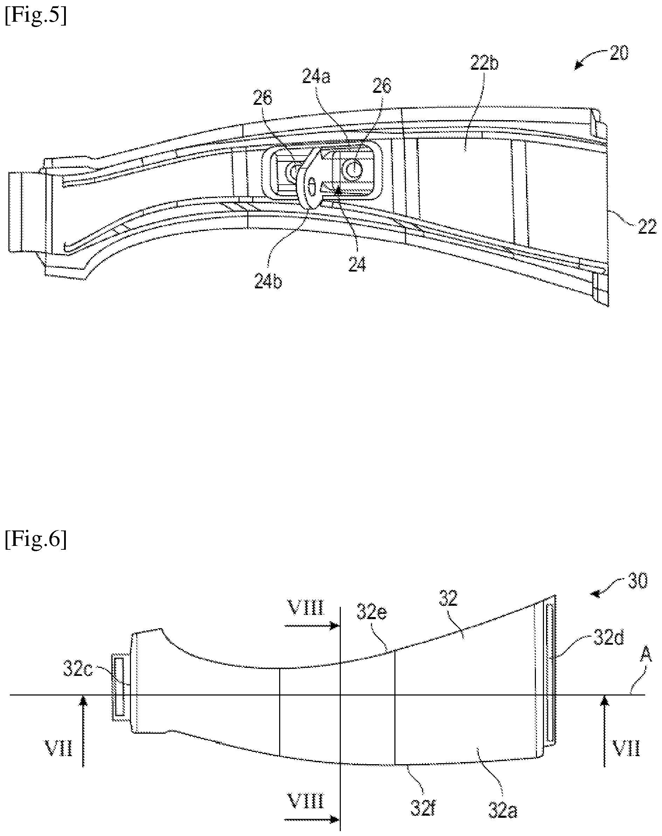

L'invention permet de remédier à au moins une partie de ces problèmes et propose une plateforme dont un mode de réalisation est représenté aux figures 6 à 8.

La plateforme composite 30 comporte une paroi 32 de forme allongée le long d'un axe A et configurée pour s'étendre entre deux aubes de soufflante.

Cette paroi 32 comporte une face externe 32a aérodynamique et une face interne 32b sur laquelle est située une patte 34 de fixation à un disque de soufflante.

La paroi 32 comporte en outre un bord amont 32c, un bord aval 32d, un bord latéral incurvé concave 32e et un bord latéral incurvé convexe 32f. On comprend que le bord incurvé concave 32e s'étend le long d'un extrados d'une aube, du bord d'attaque au bord de fuite de cette aube, et que le bord incurvé convexe 32f s'étend le long d'un intrados d'une aube adjacente, du bord d'attaque au bord de fuite de cette aube adjacente. A chacune des extrémités axiales de la paroi 32, au niveau des bords 32c, 32d, la paroi peut avoir un rebord ou former une marche. Ces extrémités sont destinées à coopérer avec les viroles du rotor de soufflante, comme évoqué dans ce qui précède en relation avec la figure 1.

La patte de fixation 34 est formée d'une seule pièce avec une armature métallique 36 qui est au moins en partie intégrée dans la paroi 32, cette paroi 32 étant réalisée par injection d'une résine dans une préforme fibreuse de façon à ne pas utiliser de vis de fixation ou analogue.

La préforme est réalisée par tissage en trois dimensions de fibres, par exemple au moyen d'une machine du type métier à tisser Jacquard. Les fibres sont par exemple en carbone.

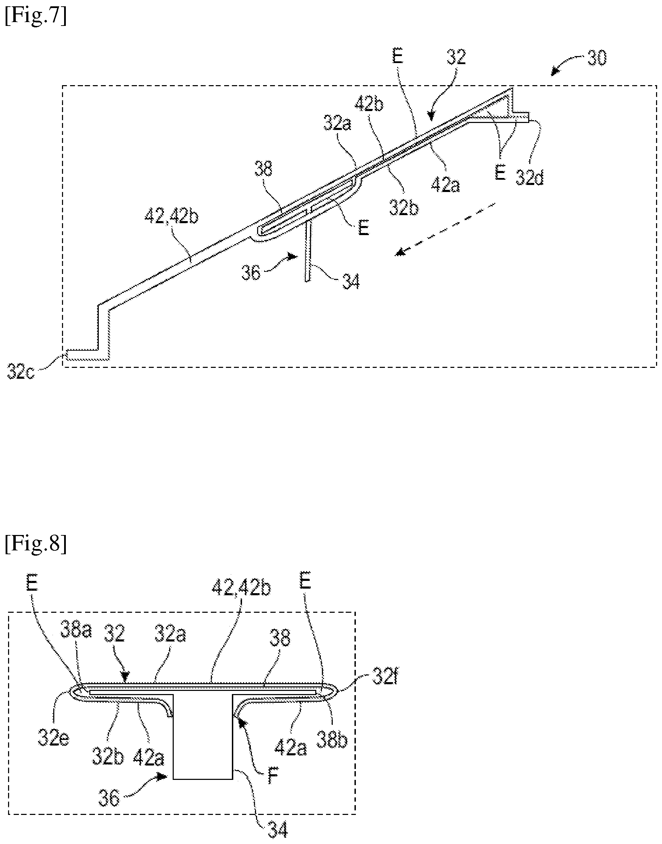

L'armature 36 comprend une plaque 38 qui s'étend le long d'une partie de la paroi 32 et qui est reliée à la patte de fixation 34. La figure 7 permet de constater que la plaque 38 s'étend à distance des extrémités amont 32c et aval 32d de la paroi 32. La figure 8 permet quant à elle de constater que la plaque 38 comporte deux bords latéraux 38a, 38b qui sont en retrait par rapport aux bords latéraux 32e, 32f de la paroi 32.

Les bords 32e, 32f de la paroi 32 sont ainsi réalisés à partir de la préforme injectée de résine et ne comprennent pas de partie métallique de la plaque 38, ce qui est particulièrement important car ces bords sont susceptibles d'entrer en contact avec une aube et être écrasable par cette aube en cas de rupture de cette dernière. La fonction « fusible » de ces bords est en effet un critère important de ces plateformes pour le critère de sécurité.

L'armature 36 et en particulier la plaque 38 peut être au moins en partie revêtue d'un primaire d'accrochage ou être soumise à un traitement de surface, en vue d'améliorer la tenue mécanique de la résine sur l'armature.

L'armature 36 peut être composée en aluminium, titane, ou acier inoxydable et fabriquée par fonderie, forgeage, emboutissage et soudage, usinage, électroérosion ou encore fabrication additive, etc.

La résine de la paroi 32 est de préférence thermodurcissable ou thermoplastique et est par exemple une résine époxy.

L'invention propose un procédé de fabrication de cette plateforme 30, qui comprend les étapes de :
a) réalisation de la préforme 42 par tissage en trois dimensions de fibres,
b) délier une partie des fibres de la préforme 42 le long de l'axe A, depuis une extrémité longitudinale de la préforme, par exemple l'extrémité aval 32d comme illustré à la figure 7, de façon à désolidariser au moins une couche longitudinale 42a de fibres du reste 42b de la préforme, cette couche de fibres 42a étant séparée du reste 42b de la préforme par un espace longitudinal E,
c) insérer l'armature 36 et en particulier la plaque 38 dans cet espace E, depuis l'extrémité 32d jusqu'à une position souhaitée de la patte 34 le long de l'axe A, et
d) injecter une résine thermodurcissable ou thermoplastique dans la préforme 42 de façon à former la paroi 32 et à solidariser l'armature 36 à cette paroi.

L'injection peut être réalisée de plusieurs façons choisies par exemple parmi : l'injection RTM, VA-RTM, polyflex, bâche à vide, etc., ces types d'injection étant connus de l'homme du métier dans ce domaine.

Comme on le voit dans les dessins, seule la plaque 38 est insérée dans l'espace E et recouverte par la couche 42a et plus exactement les couches 42a disposées de part et d'autre de l'armature 36.

La patte de fixation 34 s'étend à travers la fente F et qui débouche dans l'espace E et qui sépare les due couches 42a. Chaque couche 42a a un bord libre situé du côté de la fente F et un bord 43 opposé qui est relié par tissage au reste 42b de la préforme. La patte de fixation 34 est de préférence reliée à la paroi 38 par des congés 44 qui sont recouverts par des parties des couches 42a, et en particulier les parties s'étendant le long des bords situés du côté de la fente F. Cela évite à ces couches et donc aux fibres d'être pliées, ce qui pourrait créer des zones de faiblesse dans la plateforme 30. L'invention apporte plusieurs avantages :
- L'utilisation d'un matériau métallique adapté (par exemple du titane ou un acier inoxydable) permet d'éviter un couplage galvanique avec le matériau composite sélectionné pour la paroi 32, par exemple préforme en fibres de carbone et résine époxy.
- L'intégration de l'armature dans la préforme, en déliant une partie de cette dernière, permet de simplifier la mise en oeuvre par opposition à une coupe au centre de la préforme dans laquelle serait glissée l'armature, qui serait une opération plus complexe et moins reproductible.
- L'intégrité de la préforme au niveau des bords latéraux de la plateforme est avantageusement (la continuité des fibres est conservée sur le pourtour de l'armature) afin d'améliorer la tenue à l'arrachement de la patte de fixation 34. Idéalement, un fort entrelacement est préconisé dans cette zone pour améliorer la tenue à l'arrachement de l'armature. Une pièce comme la plateforme étant exposée aux grêlons, l'utilisation d'un tissage avec fort entrelacement permet également de réduire l'endommagement en cas d'impact.
- Le recouvrement de la plaque de l'armature par des couches de la préforme est importante pour améliorer la durée de vie de la pièce ; un amas de résine serait un point d'amorçage privilégié pour les fissures d'origine thermique et mécanique. La forme du contact entre la préforme et l'armature, en particulier au niveau des congés 44, est conçue pour permettre à la préforme d'épouser son contour, ce qui permet de garantir le taux de fibre dans cette zone et d'éviter les concentrations de contraintes.
- Le risque de flambage de la performe et de la plateforme est réduit.
- Un gain de masse estimée entre 10 et 20% par pièce, en éliminant vis, écrous, et rondelles. La masse de la plateforme peut être minimisée via une conception optimisée de l'armature (épaississement aux endroits contraints, possibilité de creuser/évider l'armature, optimisation de sa forme et ses dimensions, etc.).
- Une garantie que la face aérodynamique 32a reste lisse dans le temps, sans perturbation de flux d'air, suite à la suppression des vis et une meilleure tenue de la pièce suite à une rigidification globale de la pièce due à l'armature et/ou aux renforts et/ou aux raidisseurs.
- Un gain de prix de la pièce qui peut ne pas nécessiter d'opération de retouche à la sortie du moule. Ce n'est plus un assemblage de plusieurs pièces mais une même et seule pièce du fait de l'intégration de plusieurs fonctions (raidisseurs, bords fusibles, etc.).
- Une simplification de montage et de fabrication. La pièce étant aux cotes finies, elle peut directement être montée. Sa géométrie et ses dimensions sont assurées par le moule. La géométrie finale est maîtrisée car le positionnement de l'armature métallique directement dans le moule permet de garantir la reproductibilité de la forme.
- Une amélioration de la durée de vie de la pièce puisque les contraintes de serrage sont nulles et l'effort transite au travers de l'armature métallique.

## Revendications

1. Procédé de fabrication d'une plateforme composite (30) pour une soufflante de turbomachine d'aéronef, cette plateforme comportant une paroi (32) de forme allongée et configurée pour s'étendre entre deux aubes de soufflante (3), cette paroi comportant une face externe (32a) aérodynamique et une face interne (32b) sur laquelle est située une patte de fixation (34) configurée pour être fixée à un disque de soufflante (2), comprenant les étapes de :
a) réalisation d'une préforme (42) par tissage en trois dimensions de fibres, cette préforme ayant une forme allongée le long d'un axe d'allongement (A),
b) délier une partie des fibres de la préforme le long dudit axe, depuis une extrémité longitudinale (32d) de la préforme, de façon à désolidariser au moins une couche longitudinale de fibres (42a) du reste (42b) de la préforme, ladite au moins une couche de fibres étant séparée du reste de la préforme par un espace longitudinal (E),
**caractérisé en ce que** le procédé comprend les étapes de:
c) insérer une armature métallique (36) dans cet espace longitudinal, depuis ladite extrémité longitudinale de la préforme, cette armature étant formée d'une seule pièce avec ladite patte de fixation et étant positionnée dans ledit espace en fonction de la position souhaitée de cette patte, et
d) injecter une résine thermodurcissable ou thermoplastique dans la préforme de façon à former ladite paroi et à solidariser l'armature à cette paroi.

2. Procédé selon la revendication 1, dans lequel l'armature (36) comprend une plaque (38) sensiblement plane logée dans ledit espace (E) et intercalée entre ladite au moins une couche (42a) et le reste (42b) de la préforme.

3. Procédé selon la revendication 2, dans lequel la plaque (38) est intercalée entre deux couches de fibres (42a) et le reste de la préforme, les deux couches étant sensiblement coplanaires et étant séparées l'une de l'autre par une fente (F) qui débouche dans ledit espace (E) et à travers laquelle s'étend ladite patte de fixation (34).

4. Procédé selon la revendication 2 ou 3, dans lequel la patte de fixation (34) est reliée à la plaque (38) par des congés (44) qui sont recouverts par une partie de ladite au moins une couche (42a).

5. Procédé selon l'une des revendications 2 à 4, dans lequel ladite au moins une couche (42a) est reliée au reste (42b) de la préforme par au moins un bord tissé (43).

6. Plateforme composite (30) pour une soufflante de turbomachine d'aéronef, cette plateforme étant fabriquée par un procédé selon l'une des revendications précédentes, cette plateforme étant dépourvue d'éléments mécaniques de fixation de l'armature à la préforme et à la plateforme, et ladite face externe étant dépourvue d'orifices de montage de tels éléments.

7. Plateforme (30) selon la revendication 6, dans laquelle l'armature (36) comprend une plaque (38) qui s'étend le long de la paroi et qui est reliée à ladite patte de fixation (36), cette plaque (38) étant située à distance des extrémités amont et aval de la paroi (32).

8. Plateforme (30) selon la revendication 6 ou 7, dans laquelle la paroi (32) comprend un bord latéral (32e) qui est incurvé concave et un bord latéral (32f) opposé qui est incurvé convexe, la plaque (38) comportant deux bords latéraux (38a, 38b) qui sont en retrait par rapport aux bords latéraux de la paroi.

9. Turbomachine d'aéronef, **caractérisée en ce qu'**elle comporte une soufflante comportant un disque (2) portant des aubes (3) et des plateformes (30) selon l'une des revendications 6 à 8.

## Patentansprüche

1. Verfahren zur Herstellung einer Verbundplattform (30) für ein Gebläse einer Turbomaschine eines Luftfahrzeugs, wobei die Plattform eine längliche Wand (32) aufweist, die dazu konfiguriert ist, sich zwischen zwei Gebläseschaufeln (3) zu erstrecken, wobei die Wand eine aerodynamische Außenseite (32a) und eine Innenseite (32b) aufweist, an der sich eine Befestigungslasche (34) befindet, die dazu konfiguriert ist, an einer Gebläsescheibe (2) befestigt zu werden, umfassend die Schritte des
a) Herstellens einer Vorform (42) durch dreidimensionales Weben von Fasern, wobei die Vorform eine längliche Form entlang einer Verlängerungsachse (A) aufweist,
b) Lösens eines Teils der Fasern der Vorform entlang der Achse ausgehend von einem länglichen Ende (32d) der Vorform, um mindestens eine längliche Faserschicht (42a) von dem Rest (42b) der Vorform zu trennen, wobei die mindestens eine Faserschicht von dem Rest der Vorform durch einen länglichen Zwischenraum (E) getrennt ist,
**dadurch gekennzeichnet, dass** das Verfahren die folgenden Schritte umfasst:
c) Einsetzen eines metallischen Rahmens (36) in diesen länglichen Raum ausgehend vom Längsende der Vorform, wobei dieser Rahmen einstückig mit der Befestigungslasche ausgebildet ist und in dem Raum in Abhängigkeit von der gewünschten Positionierung dieser Lasche positioniert wird, und
d) Einspritzen eines wärmehärtenden oder thermoplastischen Harzes in die Vorform, um die Wand zu bilden und den Rahmen fest mit dieser Wand zu verbinden.

2. Verfahren nach Anspruch 1, wobei der Rahmen (36) eine im Wesentlichen flache Platte (38) umfasst, die in dem Raum (E) untergebracht ist und zwischen der mindestens einen Schicht (42a) und dem Rest (42b) der Vorform eingefügt ist.

3. Verfahren nach Anspruch 2, wobei die Platte (38) zwischen zwei Faserschichten (42a) und dem Rest der Vorform eingefügt ist, wobei die beiden Schichten im Wesentlichen koplanar sind und durch einen Schlitz (F) voneinander getrennt sind, der in den Raum (E) mündet und durch den sich die Befestigungslasche (34) erstreckt.

4. Verfahren nach Anspruch 2 oder 3, wobei die Befestigungslasche (34) mit der Platte (38) durch Ausrundungen (44) verbunden ist, die von einem Teil der mindestens einen Schicht (42a) bedeckt sind.

5. Verfahren nach einem der Ansprüche 2 bis 4, wobei die mindestens eine Schicht (42a) durch mindestens einen gewebten Rand (43) mit dem Rest (42b) der Vorform verbunden ist.

6. Verbundplattform (30) für ein Gebläse einer Turbomaschine eines Luftfahrzeugs, wobei diese Plattform durch ein Verfahren nach einem der vorstehenden Ansprüche hergestellt wird, wobei diese Plattform ohne mechanische Elemente zum Befestigen des Rahmens an der Vorform und an der Plattform ausgeführt ist, und wobei die Außenseite ohne Öffnungen zum Befestigen solcher Elemente ausgeführt ist.

7. Plattform (30) nach Anspruch 6, wobei der Rahmen (36) eine Platte (38) umfasst, die sich entlang der Wand erstreckt und mit der Befestigungslasche (36) verbunden ist, wobei die Platte (38) in einem Abstand von den Enden stromaufwärts und stromabwärts der Wand (32) angeordnet ist.

8. Plattform (30) nach Anspruch 6 oder 7, wobei die Wand (32) einen Seitenrand (32e) umfasst, der konkav gekrümmt ist, und einen gegenüberliegenden Seitenrand (32f), der konvex gekrümmt ist, wobei die Platte (38) zwei Seitenränder (38a, 38b) aufweist, die in Bezug auf die Seitenränder der Wand zurückversetzt sind.

9. Turbomaschine für ein Luftfahrzeug, **dadurch gekennzeichnet, dass** sie ein Gebläse aufweist, das eine Scheibe (2) aufweist, die Schaufeln (3) und Plattformen (30) nach einem der Ansprüche 6 bis 8 trägt.

## Claims

1. A method for manufacturing a composite platform (30) for an aircraft turbine engine fan, this platform comprising a wall (32) of elongated shape and configured to extend between two fan vanes (3), this wall comprising an aerodynamic external face (32a) and an internal face (32b) on which is located an attachment tab (34) configured to be attached to a fan disc (2),
comprising the steps of:
a) making a preform (42) by three-dimensional weaving of fibres, this preform having an elongated shape along an axis of elongation (A),
b) unbinding a portion of the fibres of the preform along said axis, from a longitudinal end (32d) of the preform, so as to disengage at least one longitudinal layer of fibres (42a) from the remainder (42b) of the preform, said at least one layer of fibres being separated from the remainder of the preform by a longitudinal space (E),
**characterised in that** the method comprises the steps of:
c) inserting a metallic framework (36) into this longitudinal space, from said longitudinal end of the preform, this framework being formed in one part with said attachment tab and being positioned in said space according to the desired position of said tab, and
d) injecting a thermosetting or thermoplastic resin into the preform so as to form said wall and to secure the framework to said wall.

2. The method of claim 1, wherein the framework (36) comprises a substantially flat plate (38) housed in said space (E) and interposed between said at least one layer (42a) and the remainder (42b) of the preform.

3. The method according to claim 2, wherein the plate (38) is interposed between two layers of fibres (42a) and the remainder of the preform, the two layers being substantially coplanar and being separated from each other by a slit (F) which opens into said space (E) and through which said attachment tab (34) extends.

4. The method according to claim 2 or 3, wherein the attachment tab (34) is connected to the plate (38) by fillets (44) that are covered by a portion of said at least one layer (42a).

5. The method of any of claims 2 to 4, wherein said at least one layer (42a) is connected to the remainder (42b) of the preform by at least one woven edge (43).

6. A composite platform (30) for an aircraft turbine engine fan, this platform being manufactured by a method according to one of the preceding claims, this platform being devoid of mechanical elements for attaching the framework to the preform and to the platform, and said external face being devoid of orifices for mounting such elements.

7. The platform (30) of claim 6, wherein the framework (36) comprises a plate (38) extending along the wall and connected to said attachment tab (36), said plate (38) being spaced from the upstream and downstream ends of the wall (32).

8. The platform (30) of claim 6 or 7, wherein the wall (32) comprises a lateral edge (32e) that is concave curved and an opposite lateral edge (32f) that is convex curved, the plate (38) comprising two lateral edges (38a, 38b) that are set back from the lateral edges of the wall.

9. An aircraft turbine engine, **characterised in that** it comprises a fan comprising a disc (2) carrying vanes (3) and platforms (30) according to one of claims 6 to 8.
